# EUROPÄISCHE PATENTSCHRIFT

(11) **EP 2 701 380 B1**
(45) Veröffentlichungstag und Bekanntmachung des Hinweises auf die Patenterteilung: **01.07.2015**
(21) Anmeldenummer: 12181646.6
(22) Anmeldetag: 24.08.2012
(51) Int. Cl.: G06K 7/10, H04N 5/232

(54) **Kamera und Verfahren zur Aufnahme scharfer Bilder**
Camera and method for taking focused pictures
Caméra et procédé pour la prise des images nettes

(43) Veröffentlichungstag der Anmeldung: 26.02.2014
(73) Patentinhaber: SICK AG, 79183 Waldkirch (DE)
(72) Erfinder: Torabi, Dr. Bahram, 79100 Freiburg (DE)
(74) Vertreter: Hehl, Ulrich

(56) Entgegenhaltungen:
- EP-A1- 2 270 571
- US-A- 5 249 058
- US-A- 6 130 417
- US-A1- 2008 025 715
- US-A1- 2009 059 057

## Beschreibung

Die Erfindung betrifft eine Kamera mit einem Bildsensor und ein Verfahren zur Aufnahme scharfer Bilder nach dem Oberbegriff von Anspruch 1 beziehungsweise 13. Kameras mit einem Bildsensor zur Erzeugung von Bildern in Form von Bilddaten sind in vielfältigen Bauformen bekannt. Eine besondere Anwendung von Kameras ist das Lesen von Codes beispielsweise an Supermarktkassen, zur automatischen Paketidentifikation, Sortierung von Postsendungen oder bei der Gepäckabfertigung in Flughäfen. Mit Hilfe des Bildsensors werden Objekte mit den darauf befindlichen Codes aufgenommen, in den Bildern durch digitale Verarbeitung der Bilddaten die Codebereiche identifiziert und dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. In einer wichtigen Anwendungsgruppe werden die Code tragenden Objekte an dem Codeleser vorbei gefördert. Eine Kamera, häufig eine Kamerazeile, liest dabei die Objektbilder mit den Codeinformationen sukzessive mit der Relativbewegung ein.

Viele Kamerasysteme sind in der Lage, sich selbsttätig auf ein Zielobjekt scharf zu stellen. Üblicherweise ermittelt ein vorgelagertes System den Abstand zu dem Zielobjekt und übermittelt ihn an das mit einer schnellen Fokusverstelleinheit ausgestattete Kamerasystem. Das Kamerasystem stellt daraufhin die Fokuslage so ein, dass das Zielobjekt oder der ausgewählte Bildausschnitt scharf abgebildet wird. Für ein solches Autofokussystem wird demnach ein zusätzlicher Sensor zur Abstandsbestimmung benötigt.

Aus der US 2004/0109081 A1 ist eine Autofokuskamera bekannt, bei der sich die Fokuslinse kontinuierlich längs einer optischen Achse bewegt. Während des Abfahrens der Fokuslage werden mehrere Bilder aufgenommen. Mittels Bildbearbeitung wird eine Autofokusbewertung der Bilder berechnet, die auf den hochfrequenten Anteilen der Bilder beruht. Aus den verschiedenen Autofokusbewertungen zu den unterschiedlichen Fokuslagen wird eine Fokuslage berechnet, welche die Autofokusbewertung maximiert. Anschließend wird die Fokuslinse gezielt auf diese maximierende Fokuslage verfahren. Dieses Vorgehen bedarf aber einigen Vorlaufes, ehe ein scharfes Bild aufgenommen werden kann, und unregelmäßiger Bewegungen der Fokuslinse, um die maximierende Fokuslage nach deren Auffinden einzustellen.

Aus der US 2008/0025715A1 ist eine Kamera bekannt, die verschiedene Autofokusverfahren nutzt. Neben einer Fokuseinstellung anhand einer Abstandsmessung wird dort auch ein zweistufiges Autofokusverfahren vorgestellt, das auf einem Bildschärfemaß beruht. Ein erstes sogenanntes "Hill-Climbing"-Verfahren verfährt die Fokuslage in relativ groben Bewegungsschritten entgegen dem Gradienten des Bildschärfemaßes, bis dessen Maximum erreicht ist. Ein zweites Verfahren vollzieht dann in feinen Bewegungsschritten eine Schwingbewegung der Fokuslage mit kleiner Amplitude um die derart aufgefundene Fokuslage.

Die US 6 130 417 beschreibt eine Kamera, die zwei Autofokusverfahren anbietet. Neben dem soeben schon genannten "Hill-Climbing"-Verfahren kann hier auch ein sogenannter "Full Scanning"-Modus gewählt werden. Dabei wird das Bildschärfemaß über sämtliche verfügbaren Fokuslagen von Nahbereich bis Unendlich vermessen, darin das Maximum bestimmt und die Linse gezielt in diese optimale Fokuslage verfahren.

In der EP 2 270 571 A1 wird eine austauschbare Linse mit einem Fokusverstellantrieb offenbart. In einem von drei Autofokusmodi zur Aufnahme von bewegten Bildern wird die Fokuslage kontinuierlich in einem kleinen Intervall hin- und herverstellt. Zu jedem aufgenommenen Bild wird ein Bildschärfemaß bestimmt und anhand dessen die Nulllage der Hin- und Herbewegung kontinuierlich nachgeführt.

Bei einem Autofokusverfahren gemäß US 5 249 058 wird zuerst ein Bildschärfemaß über alle verfügbaren Fokuslagen an nur wenigen Stützstellen bestimmt. In der Umgebung des so erhaltenen Maximalwertes wird dann erneut mit dichter liegenden Stützstellen gesucht und die derart aufgefundene Fokuslage angefahren.

Ein Bildaufnahmeverfahren nach US2009/0059057A1 nimmt mit Hilfe einer multifokalen Linse mehrere Bilder in unterschiedlichen Fokuslagen auf. Anschließend wird ein gemeinsames Bild aus scharfen Bildbereichen der einzelnen Bilder zusammengesetzt.

Es ist daher Aufgabe der Erfindung, einen verbesserten Autofokus für eine Kamera anzugeben.

Diese Aufgabe wird durch eine Kamera mit einem Bildsensor und ein Verfahren zur Aufnahme scharfer Bilder nach Anspruch 1 beziehungsweise 13 gelöst. Dabei geht die Erfindung von dem Grundgedanken aus, die Fokuslage unabhängig von einer Kenntnis der optimalen Fokuslage kontinuierlich und periodisch hin und her zu verfahren. An mindestens zwei unterschiedlichen Fokuslagen, die an sich beliebig sind, jedoch für eine gute Extrapolationsbasis einen gewissen Mindestabstand voneinander haben sollten, werden Bilder aufgenommen, die wegen der Zufälligkeit der Fokuslage aller Voraussicht nach unscharf sind. Aus diesen Bildern wird anhand von deren Schärfegrad eine optimale Fokuslage bestimmt. Wenn nun die optimale Fokuslage während eines folgenden Zyklus' erreicht ist, wird ein weiteres, nunmehr voraussichtlich scharfes Bild aufgenommen. Es wird also anders als herkömmlich nicht die gewünschte Fokuslage eingestellt, sondern das Zeitverhalten bei der Aufnahme an eine vorgegebene, regelmäßige Änderung der Fokuslage angepasst (Sampling Time Based Autofocus, STB).

In der Regel wird das bei der optimalen Fokuslage aufgenommene Bild als scharfes Bild weiterverarbeitet, während die übrigen Bilder lediglich zur Bestimmung der optimalen Fokuslage herangezogen und anschließend verworfen werden. Die Bildinformation kann aber auch noch genutzt werden, beispielsweise um verschiedene Bildbereiche mit Objekten in unterschiedlichem Abstand aus mehreren Bildern zusammenzufügen oder um anhand mehrerer Bilder desselben Objekts bei unterschiedlichen Fokuslagen Kontraste nachzuschärfen oder andere Korrekturen durch Bildverarbeitungen vorzunehmen.

Die Erfindung hat den Vorteil, dass eine vereinfachte Autofokusfunktion mit weniger Aufwand und Kosten bei Inbetriebnahme und Herstellung ermöglicht wird. Auf eine eigene Abstandsermittlung kann verzichtet werden. Es wird Bauraum eingespart, und der Autofokus ist kalibrierungsfrei. Da sich der Aufnahmezeitpunkt für das weitere Bild bei der Fokuslage größter Bildschärfe relativ auf die Aufnahmezeitpunkten an der dritten beziehungsweise vierten Fokuslage bezieht, sind Toleranzen der Fokuseinheit durch Temperaturschwankungen, mechanisches Spiel oder andere Fehlerquellen automatisch kompensiert, so dass der Autofokus ausgesprochen robust arbeitet. Die Bewegungen der Fokuseinheit erfolgen in sehr ruhigen, regelmäßigen Bahnen, was nochmals zu einer größeren Robustheit sowie zu einer längeren Lebensdauer führt.

Vorzugsweise wird genau ein weiteres Bild bei der Fokuslage größter Bildschärfe aufgenommen. Denkbar ist aber auch eine Art Schrotschuss mit mehreren Aufnahmen in einer Umgebung der Fokuslage größter Bildschärfe, wobei dann anschließend die beste Aufnahme selektiert oder ein Überlagerungsbild erstellt wird. Die jeweilige Fokuslage größter Bildschärfe wird jeder nachfolgenden Halbperiode einmal überstrichen, so dass scharfe Bilder mit der halben Periode aufgenommen werden können, mit welcher die Fokuslage kontinuierlich hin und her verfahren wird.

Die erste Fokuslage und/oder die zweite Fokuslage entsprechen bevorzugt einer Endauslenkung der Fokuseinheit. Die Fokuslage schwingt demnach insbesondere regelmäßig zwischen Maximallagen. Dabei handelt es sich vorzugsweise um maximale mögliche Auslenkungen der Fokuseinheit. Denkbar ist aber auch, dass die Maximallagen auf einen gewählten Objektabstandsbereich eingestellt werden. Die erste Fokuslage und/oder die zweite Fokuslage können auch zwischen Zyklen des kontinuierlichen Verfahrens der Fokuslage variiert werden. Das ist zum Beispiel nützlich, wenn man aufgrund von Vorinformationen weiß oder voraussetzt, dass für eine gewisse Zeitspanne nur ein bestimmter Fokusbereich benötigt wird.

Die erste Fokuslage ist bevorzugt gleich der dritten Fokuslage und/oder die zweite Fokuslage gleich der vierten Fokuslage. Mit anderen Worten werden die Bilder, aus denen der Schärfegrad zur Extrapolation der Fokuslage größter Bildschärfe bestimmt wird, gerade an den Umkehrpunkten der Hin- und Herbewegung der Fokuseinheit aufgenommen. Weitere Aufnahmen während des Verfahrens zwischen den Umkehrpunkten für eine breitere Basis der Extrapolation sind denkbar.

Die Steuer- und Auswertungseinheit ist bevorzugt dafür ausgebildet, mindestens eine früher ermittelte Fokuslage größter Bildschärfe zu speichern und bei der Ermittlung einer aktuellen Fokuslage größter Bildschärfe zu berücksichtigen. Es wird also eine Historie der Fokuslagen größter Bildschärfe für die aktuell zu berechnende Fokuslage größter Bildschärfe mit herangezogen. Dies ist sinnvoll, wenn die Szenerie zumindest nicht so hochdynamisch ist, dass zwischen Aufnahmen von weiteren Bildern in deren jeweiliger Fokuslage größter Bildschärfe das gleiche Objekt in einem zumindest ähnlichen Abstand erwartet werden kann. Die Historie kann beispielsweise dadurch berücksichtigt werden, dass die aktuelle Fokuslage größter Bildschärfe nur in Form einer Korrektur zur vorhergehenden Fokuslage größter Bildschärfe bestimmt wird, oder indem ein gewichtetes Mittel gebildet wird, bei dem Fokuslagen größter Bildschärfe umso weniger Gewicht haben, je älter sie sind.

Die Steuer- und Auswertungseinheit ist bevorzugt dafür ausgebildet, mindestens ein früher an einer Fokuslage größter Bildschärfe aufgenommenes Bild bei der Ermittlung einer aktuellen Fokuslage größter Bildschärfe zu berücksichtigen. Auch hier wird die Historie der weiteren Bilder herangezogen, allerdings nicht direkt durch Einbeziehen früherer Fokuslagen größter Bildschärfen, sondern indem die in früheren Zyklen oder Halbzyklen aufgenommenen weiteren Bilder als Teil der Extrapolationsbasis für die Bestimmung der aktuellen Fokuslage größter Bildschärfe mitgenutzt werden. Bei beiden beschriebenen Möglichkeiten, eine Historie zu berücksichtigen, kann auf ähnliche Weise vorgegangen werden, und sie können auch miteinander kombiniert werden. Durch die Historie kann sich ein gewisses Einschwing- und auch Hystereseverhalten besonders bei hochdynamischen Szenerien ergeben.

Die Steuer- und Auswertungseinheit ist bevorzugt dafür ausgebildet, ein Gesamtbild aus nacheinander aufgenommenen Bildern zusammenzufügen insbesondere Bildzeilen von relativ zu der Kamera bewegten Objekten. Diese Bildverarbeitung, die auch als Image Stitching bezeichnet wird, ist besonders geeignet bei einer Relativbewegung von Kamera und auszunehmenden Objekten, wie bei einer stationären Montage der Kamera über einem Förderband oder einer Straße. In diesen Fällen ist eine Berücksichtigung einer Historie der Fokuslagen größter Bildschärfe besonders nützlich, weil in aufeinanderfolgenden Aufnahmen meist die gleichen Objekte lediglich mit einem kleinen Versatz erfasst werden. Das entstehende Gesamtbild deckt dabei einen größeren Bereich ab als die zugrunde liegenden Einzelbilder, es kommen demnach gegenüber den Einzelbildern neue Bildelemente oder Pixel hinzu. In einer besonders bevorzugten Ausführungsform handelt es sich bei der Kamera um eine Zeilenkamera, die einen Objektstrom von relativ zu der Kamera bewegten Objekten während der Relativbewegung zeilenweise erfasst. Das Image Stitching kann dann aufgrund der bekannten Orientierungen und Verschiebungen zwischen den Einzelbildern sehr einfach durch Aneinanderreihen erfolgen, während in anderen Fällen in Überlappungsbereichen von Einzelbildern nach korrelierenden Bildelementen gesucht und diese geeignet aneinandergefügt werden.

Die Steuer- und Auswertungseinheit ist bevorzugt dafür ausgebildet, aus mehreren Bildern ein Bild mit verbesserter Bildschärfe zu berechnen. Die zu verwendende Aufnahme entspricht dabei nicht unmittelbar dem weiteren Bild, das bei der Fokuslage größter Bildschärfe aufgenommen wird. Stattdessen wird durch Bildbearbeitung ein weiter verbessertes Bild berechnet, welches die an der dritten und/oder vierten Fokuslage aufgenommenen Bilder oder noch früher aufgenommene Bilder einbezieht. Dabei werden Mehrfachaufnahmen einander entsprechender Szenerieausschnitte ausgewertet, um die Bildqualität zu erhöhen. Beispielsweise werden Bildbereiche von Objekten in unterschiedlichen Abständen aus Bildern zusammengeschnitten, die bei unterschiedlichen Fokuslagen aufgenommen wurden. Ein anderes Beispiel ist das Berechnen von Bildpunkten aus Mehrfachaufnahmen des gleichen Objekts in unterschiedlichen Fokuslagen, um den Kontrast zu erhöhen oder andere Verbesserungen aufgrund der gegenüber einer Einzelaufnahme erhöhten Bildinformationsbasis zu erreichen.

Die Steuer- und Auswertungseinheit ist bevorzugt dafür ausgebildet, den Schärfegrad mindestens eines interessierenden Bereiches eines Bildes zu bestimmen und die Fokuslage größter Bildschärfe anhand des Schärfegrades des interessierenden Bereichs zu ermitteln. Der Fokus richtet sich also nicht nach einem gemittelten Schärfegrad für das ganze Bild aus, sondern gezielt auf bestimmte Bildbereiche. Gerade für kamerabasierte Codeleser ist das sinnvoll, weil dafür Objekte beziehungsweise Codebereiche scharf aufgenommen werden sollten und unscharfe Bildbereiche des Hintergrundes ohne Weiteres in Kauf genommen werden können. Interessierende Bereiche können beispielsweise durch Vorinformationen eines anderen Sensors, etwa eines entfernungsmessenden Laserscanners, welcher die Objektgeometrie erfasst, oder durch Bildanalyse von bei der ersten beziehungsweise zweiten Fokuslage oder in einem vorhergehenden Zyklus der Fokusverstellung aufgenommenen Bildern identifiziert werden.

Die Steuer- und Auswertungseinheit ist bevorzugt dafür ausgebildet, einen Abstand von aufgenommenen Objekten zu berechnen und auszugeben. Die Abstandsinformation ist in der berechneten Fokuslage größter Bildschärfe enthalten, wobei diese Fokuslage sich auf einen gemittelten Abstand aller Objekte oder bei Einschränkung auf interessierende Bereiche mit jeweils einem Objekt auch auf einzelne Objekte bezieht. Eine Ausgabe von Abstandsinformationen entspricht praktisch einer Umkehrung des sonst üblichen Verfahrens, zunächst den Abstand zu messen und anschließend den Fokus darauf einzustellen.

Die Kamera weist bevorzugt einen Shutter oder eine Pulsbeleuchtungseinrichtung, insbesondere eine Blitzlichtbeleuchtung auf, wobei die Steuer- und Auswertungseinheit dafür ausgebildet ist, einen Aufnahmezeitpunkt für ein Bild durch Öffnung des Shutters oder Auslösen eines Beleuchtungspulses festzulegen. Damit verfügt die Kamera über eine einfache Steuerungsmöglichkeit, die Bildaufnahmen zeitlich präzise an der dritten oder vierten Fokuslage sowie gegebenenfalls an weiteren Fokuslagen zur Bestimmung einer Extrapolationsbasis für die Bildschärfe und insbesondere an der ermittelten Fokuslage größter Bildschärfe auszulösen.

Die Fokuseinheit weist bevorzugt eine optomechanische Verstelleinheit zur Veränderung einer Brennweite oder einer Bildschnittweite der Empfangsoptik auf. Dabei werden Abstände zwischen Linsen, Spiegeln oder anderen optischen Elementen der Empfangsoptik verändert, um die Fokuslage kontinuierlich variieren zu können. Die optomechanische Verstelleinheit weist Komponenten wie einen Motor, eine Tauchspule oder ähnliches auf. Alternativ wird eine Flüssigkeitslinse eingesetzt. Diese kann direkt ihre eigene Brennweite verstellen, beispielsweise indem die Krümmung einer Membran durch Pumpen von Flüssigkeit in oder aus einer von der Membran begrenzten Kammer variiert wird, oder indem eine Grenzfläche zwischen zwei optisch transparenten Medien durch Anlegen einer unterschiedlichen Spannung in ihren Krümmungseigenschaften verändert wird (Elektrowettingeffekt).

Die Kamera ist bevorzugt als kamerabasierter Codeleser ausgebildet und weist eine Decodiereinheit auf, um in einem Bild Codebereiche zu erkennen und deren Codeinhalt auszulesen. Für solche Aufgaben ist ein zumindest einigermaßen scharfes Bild erforderlich, und gerade bei kontinuierlicher Codeerfassung an einem Objektstrom eignet sich das kontinuierliche, periodische Hin- und Herverfahren besonders, um den Aufofokus ständig nachzuführen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: ein vereinfachtes Blockschaltbild einer Kamera gemäß einer Ausführungsform der Erfindung;
- Fig. 2: einen beispielhaften zeitlichen Verlauf der Fokuslage während des periodischen Verfahrens zur Erläuterung der verschiedenen Aufnahmezeitpunkte; und
- Fig. 3: eine schematische dreidimensionale Ansicht der Montage einer erfindungsgemäßen Kamera an einem Förderband insbesondere zum Lesen von Codes.

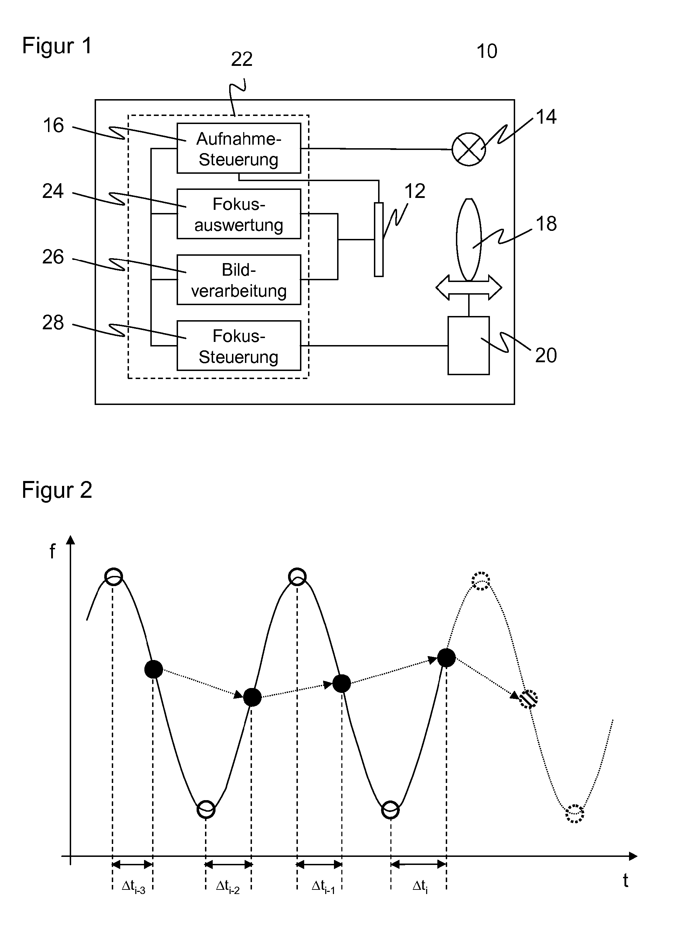

Figur 1 zeigt ein vereinfachtes Blockschaltbild einer Ausführungsform einer erfindungsgemäßen Kamera 10. Die Kamera 10 umfasst eine Bildaufnahmeeinheit mit einem Bildsensor 12, einer Beleuchtung 14 und einer Aufnahmesteuerung 16. Der Bildsensor 12 weist eine Vielzahl lichtempfindlicher Empfangselemente auf, die zu einer Zeile oder einer Matrix angeordnet sein können und entsprechende in Pixel aufgelöste Bilddaten liefern. Mit Hilfe einer kurzzeitigen Auslösung der Beleuchtung 14, die insbesondere als Puls- oder Blitzlichtbeleuchtung ausgebildet ist, oder kurzzeitigen Öffnens eines nicht dargestellten Shutters des Bildsensors 12 können von der Aufnahmesteuerung 16 einzelne Aufnahmen zu präzise vorgebbaren Zeitpunkten ausgelöst werden.

Dem Bildsensor 12 ist eine beispielhaft und vereinfacht als einzelne Sammellinse dargestellte Empfangsoptik 18 vorgeordnet. Deren Fokuslage ist mit Hilfe einer Fokusverstelleinheit 20 veränderbar, um die Kamera 10 auf Objekte in verschiedenen Abständen scharf zu stellen. Dazu sind verschiedene optomechanische Verstellkonzepte für Abstände zwischen Linsen, Spiegeln und anderen optischen Elementen der Empfangsoptik 18, etwa Motoren oder Tauchspulen, aber auch der Einsatz von Flüssiglinsen denkbar, welche die Brennweite beziehungsweise die Bildschnittweite der Empfangsoptik 18 und damit die Fokuslage beeinflussen.

Die Aufnahmesteuerung 16 ist Teil einer Steuer- und Auswertungseinheit 22, die in Figur 1 als Einheit dargestellt ist, jedoch auch auf mehreren Bausteinen implementiert sein kann. Die Steuer- und Auswertungseinheit 22 umfasst noch drei weitere Einheiten 24, 26, 28. Eine Fokusauswertungseinheit 24 empfängt die Bilddaten des Bildsensors 12, um in einer noch zu erläuternden Weise eine optimale Fokuslage zu ermitteln. Eine Bildverarbeitungseinheit 26 hat ebenfalls auf die Bilddaten zumindest einiger Aufnahmen Zugriff, sei es durch direkten Zugriff auf den Bildsensor 12 oder durch Verbindung mit der Fokusauswertungseinheit 24 oder Zugriff auf einen gemeinsamen nicht dargestellten Speicherbereich. In der Bildverarbeitungseinheit 26 können die tatsächlich verwerteten oder von der Kamera 10 nach außen weitergegebenen Bilder mit Bildverarbeitungsalgorithmen aufbereitet werden. Schließlich ist eine Fokussteuerungseinheit 28 vorgesehen, welche mit der Fokusverstelleinheit 20 verbunden ist, um eine gewünschte Fokuslage einzustellen.

Das in der Steuer- und Auswertungseinheit 22 implementierte erfindungsgemäße Fokussier- oder Autofokusverfahren wird nun anhand eines in Figur 2 dargestellten zeitlichen Verlaufs der Fokuslage und der ausgelösten Aufnahmen näher erläutert. Gesteuert von der Fokussteuerungseinheit 28 verändert die Fokusverstelleinheit 20 periodisch die Fokuslage zwischen zwei Endanschlagspositionen. Bei diesen Endanschlagspositionen kann es sich um mechanische Maximalauslenkungen der Empfangsoptik 18, aber auch um parametrierte Endpositionen eines gewählten Abstands- und damit Fokusbereichs handeln. An den Endanschlagspositionen, also den Umkehrpunkten des periodischen und kontinuierlichen Hin- und Herverfahrens der Fokuslage, wird jeweils völlig unabhängig von der Szenerie eine Aufnahme ausgelöst, wie in Figur 2 durch leere Kreise gezeigt. Diese Aufnahme kann zur Reduktion von Bilddaten und Auswertungsaufwand eine geringere Auflösung haben, als im Endeffekt für das zu verwertende Bild angestrebt ist.

Die Fokusauswertungseinheit 24 errechnet für jedes derart aufgenommene Bild einen Schärfegrad, der sich auf das Bild als Ganzes, aber auch lediglich auf einen oder mehrere interessierende Bereiche innerhalb des Bildes beziehen kann. Ein Schärfegrad bestimmt sich beispielsweise über den Bildkontrast oder über hochfrequenze Anteile eines Bildes. Letztlich zeigt sich eine gute Bildschärfe an den Übergängen direkt benachbarter Pixel. Bei einer scharfen Aufnahme sind die Differenzen benachbarter Pixel in Bereichen, in denen die Szenerie Struktur aufweist, vergleichsweise groß, während diese Differenzen bei unscharfen Aufnahmen verwaschen und über größere Pixelabstände verteilt werden.

Aus den Schärfegraden der in den Endanschlagspositionen aufgenommenen Bilder extrapoliert die Fokusauswertungseinheit 24 eine Fokuslage, in welcher der Schärfegrad maximiert ist. Dies wird als Extrapolation bezeichnet, weil es sich auf eine zukünftige Fokuslage bezieht, man könnte es ebenso Interpolation nennen, weil die Fokuslage meist innerhalb der Endanschlagspositionen liegen wird.

Da die Fokuslage periodisch und kontinuierlich zwischen den Endanschlagspositionen variiert, wird auch die ermittelte Fokuslage größter Bildschärfe in dem nachfolgenden Halbzyklus der variierenden Fokuslage erreicht. Das Zeitverhalten der veränderten Fokuslage ist bekannt und vorhersagbar, so dass anhand der gewünschten Fokuslage größter Bildschärfe ein Zeitpunkt vorgegeben werden kann, zu dem die Aufnahmesteuerung 16 eine Aufnahme für ein weiteres, nun scharfes Bild auslöst. Diese Aufnahmen scharfer, weiterer Bilder in jedem Halbzyklus sind in Figur 2 durch gefüllte Kreise markiert.

Nach kurzer Einschwingzeit können vorzugsweise von der Fokusauswertungseinheit 24 zusätzlich zu den beiden Aufnahmen in Endanschlagsposition unmittelbar vor dem Auslösen einer Aufnahme in der Fokuslage größter Bildschärfe weitere Aufnahmen für die Extrapolation herangezogen werden. Die verfügbare Historie setzt sich aus prinzipiell beliebig vielen früheren Aufnahmen in Endanschlagsposition oder in früheren Fokuslagen größter Bildschärfe zusammen. Je nach Dynamik in der Szenerie sollte die Historie begrenzt werden, beispielsweise durch Gewichtungen, bei denen ältere Aufnahmen an Einfluss verlieren. Alternativ zu früheren Aufnahmen kann auch lediglich das daraus gewonnene Ergebnis, nämlich für vorhergehende Halbzyklen bestimmten Fokuslagen größter Bildschärfe mit berücksichtigt werden.

Es ist möglich, aber nicht zwingend, in jedem Halbzyklus eine scharfe Aufnahme auszulösen. Alternativ können ein oder mehrere Halbzyklen ohne eine solche Aufnahme vergehen. Auch ansonsten sind Abweichungen von dem in Figur 2 dargestellten Vorgehen möglich. So ist es zwar vorteilhaft, Aufnahmen jeweils in der Endanschlagsposition auszulösen, es können aber auch andere Fokuslagen verwendet werden, um Bilder für die Extrapolation zu erzeugen. Insbesondere ist es möglich, solche Bilder in anderen Fokuslagen zusätzlich zu denjenigen in den Endanschlagspositionen aufzunehmen und dadurch die Datenbasis für die Extrapolation zu vergrößern.

Die Zeitvorgabe, um eine Aufnahme in der Fokuslage größter Bildschärfe aufzunehmen, wird vorzugsweise relativ als Differenz Δtᵢ zu einer Endanschlagsposition angegeben. Damit ist die Autofokusfunktion robust gegenüber Schwankungen etwa aufgrund von Temperatureinflüssen oder mechanischen Toleranzen, da diese Effekte den Zeitpunkt, zu dem Endanschlagspositionen eingenommen werden, in gleicher Weise beeinflussen.

In der Bildverarbeitungseinheit 26 können Bilder in vielfältiger Weise weiter aufbereitet werden. Neben Korrekturalgorithmen zur Helligkeitskorrektur, Glättung, Kompression und dergleichen können auch zu verwertende oder auszugebende Bilder aus mehreren Einzelbildern zusammengesetzt werden. Mehrere Einzelbilder sind aus der Historie der früheren Bildaufnahmen vorhanden oder werden beispielsweise erzeugt, indem nicht nur eine einzige Aufnahme bei der Fokuslage größter Bildschärfe, sondern mehrere Aufnahmen in deren Umgebung ausgelöst werden. Vorzugsweise werden auch die an den Endanschlagspositionen aufgenommenen Bilder nicht ausschließlich für die Ermittlung einer Fokuslage größter Bildschärfe, sondern ebenso für derartige Bildverarbeitungen mit herangezogen.

Die Verrechnung mehrerer Einzelbilder dient zum einen dazu, Gesamtbilder zu erstellen, die einen größeren Bereich abdecken als ein Einzelbild (Image Stitching). Im einfachsten Fall werden dazu Bildzeilen aneinandergereiht, aber auch das deutlich aufwändigere Auffinden von Überlappungsbereichen von Einzelbildern durch Korrelationsverfahren und das intelligente Zusammenfügen in solchen Überlappungsbereichen mit möglichst unsichtbaren Nahtstellen ist denkbar.

Mehrfachaufnahmen sind aber auch für übereinstimmende Bildbereiche nützlich. Am anschaulichsten ist das Zusammensetzen von Bildbereichen zu Objekten in unterschiedlichen Abständen aus Bildern, die bei jeweils passender Fokuslage aufgenommen werden. Allgemeiner kombinieren Bildverarbeitungsverfahren mehrere scharfe oder unscharfe Bilder miteinander, um noch schärfere oder höher aufgelöste Bilder zu errechnen.

Als ein weiteres Ergebnis der Bildverarbeitung können Objekte identifiziert und anhand der Fokuslage, die für deren scharfe Aufnahme erforderlich ist, Objektabstände bestimmt und ausgegeben werden. Dies kehrt das sonst übliche Autofokusverfahren um, bei dem zunächst der Abstand mit einem zusätzlichen Sensor und daraus die benötigte Fokuslage bestimmt werden.

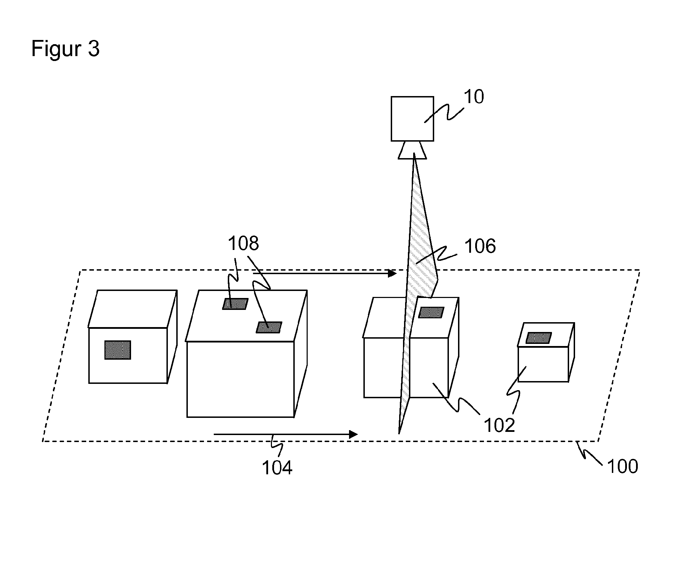

Eine spezielle Art der Kamera ist ein kamerabasierter Codeleser. Hier ist die Bildverarbeitungseinheit 26 zusätzlich mit einem Decodierer ausgerüstet, um Codebereiche in den Bildern zu identifizieren und deren Codeinformation auszulesen. Eine häufige Anwendung einer derartigen als Codeleser ausgebildeten Kamera 10 ist in Figur 3 gezeigt, welche in einer schematischen dreidimensionalen Ansicht die Montage an einem Förderband 100 zeigt.

Auf dem Förderband 100 werden Objekte 102 in einer durch einen Pfeil 104 bezeichneten Richtung gefördert. Die Kamera 10, welche hier beispielhaft als Zeilenkamera ausgebildet ist, nimmt in ihrem Erfassungsbereich 106 jeweils in jedem Halbzyklus des periodischen Hin- und Herverfahrens der Fokuslage eine Bildzeile scharf auf und setzt die Bildzeilen zu einem Gesamtbild von Objekten 102, Codes 108 oder eines gewünschten Abschnitts des Förderbands 100 mit Objekten 102 zusammen. Die Geschwindigkeit, mit welcher die Fokuslage variiert, und damit die Dauer eines Halbzyklus' und die Aufnahmefrequenz, kann auf die Fördergeschwindigkeit und die gewünschte Bildauflösung in Förderrichtung abgestimmt werden.

Aus den aufgenommenen Gesamtbildern decodiert die Kamera 10 vorzugsweise den Inhalt der Codes 108. Obwohl aber Figur 3 am Beispiel eines Codelesers erläutert wird, kann prinzipiell auch eine Kamera 10 ohne die Fähigkeit verwendet werden, Codes 108 zu dekodieren, um ohne spezielle Auswertung ein scharfes Bild des Förderbandes 100, der Objekte 102 und der darauf gegebenenfalls befindlichen Beschriftungen beziehungsweise Codes 108 zu liefern. Um Bilder auch von anderen Seiten als von oben zu erhalten, können mehrere Kameras 10 aus unterschiedlicher Perspektive angebracht werden.

## Patentansprüche

1. Kamera (10) mit einem Bildsensor (12) zur Aufnahme von Bildern, einer Empfangsoptik (18), einer verstellbaren Fokuseinheit (18, 20) zur Einstellung einer Fokuslage der Empfangsoptik (18) sowie einer Steuer- und Auswertungseinheit (22), welche dafür ausgebildet ist, mittels der Fokuseinheit (18, 20) die Fokuslage der Empfangsoptik (18) kontinuierlich zwischen einer ersten Fokuslage und einer zweiten Fokuslage zu verfahren, währenddessen bei mindestens einer dritten Fokuslage und einer vierten Fokuslage jeweils ein Bild aufzunehmen, einen Schärfegrad der Bilder zu bestimmen und daraus eine Fokuslage größter Bildschärfe zu ermitteln,
**dadurch gekennzeichnet,**
**dass** die Steuer- und Auswertungseinheit (22) weiter dafür ausgebildet ist, die Fokuslage zyklisch und kontinuierlich mit einem bekannten und vorhersagbaren Zeitverhalten zwischen der ersten Fokuslage und der zweiten Fokuslage hin und her zu verfahren, anhand der Fokuslage größter Bildschärfe und des Zeitverhaltens einen Zeitpunkt vorzugeben, zu dem die Aufnahme für ein weiteres Bild auszulösen ist, und das weitere Bild aufzunehmen, wenn während des zyklischen Verfahrens die Fokuslage größter Bildschärfe erreicht ist.

2. Kamera (10) nach Anspruch 1,
wobei die erste Fokuslage und/oder die zweite Fokuslage einer Endauslenkung der Fokuseinheit (18, 20) entsprechen.

3. Kamera (10) nach Anspruch 1 oder 2,
wobei die erste Fokuslage gleich der dritten Fokuslage und/oder die zweite Fokuslage gleich der vierten Fokuslage ist.

4. Kamera (10) nach einem der vorhergehenden Ansprüche,
wobei die Steuer- und Auswertungseinheit (22) dafür ausgebildet ist, mindestens eine früher ermittelte Fokuslage größter Bildschärfe zu speichern und bei der Ermittlung einer aktuellen Fokuslage größter Bildschärfe zu berücksichtigen.

5. Kamera (10) nach einem der vorhergehenden Ansprüche,
wobei die Steuer- und Auswertungseinheit (22) dafür ausgebildet ist, mindestens ein früher an einer Fokuslage größter Bildschärfe aufgenommenes Bild bei der Ermittlung einer aktuellen Fokuslage größter Bildschärfe zu berücksichtigen.

6. Kamera (10) nach einem der vorhergehenden Ansprüche,
wobei die Steuer- und Auswertungseinheit (22) dafür ausgebildet ist, ein Gesamtbild aus nacheinander aufgenommenen Bildern zusammenzufügen, insbesondere Bildzeilen von relativ zu der Kamera (10) bewegten Objekten (102).

7. Kamera (10) nach einem der vorhergehenden Ansprüche,
wobei die Steuer- und Auswertungseinheit (22) dafür ausgebildet ist, aus mehreren Bildern ein Bild mit verbesserter Bildschärfe zu berechnen.

8. Kamera (10) nach einem der vorhergehenden Ansprüche,
wobei die Steuer- und Auswertungseinheit (22) dafür ausgebildet ist, den Schärfegrad mindestens eines interessierenden Bereiches eines Bildes zu bestimmen und die Fokuslage größter Bildschärfe anhand des Schärfegrades des interessierenden Bereichs zu ermitteln.

9. Kamera (10) nach einem der vorhergehenden Ansprüche,
wobei die Steuer- und Auswertungseinheit (22) dafür ausgebildet ist, einen Abstand von aufgenommenen Objekten (102) zu berechnen und auszugeben.

10. Kamera (10) nach einem der vorhergehenden Ansprüche,
die einen Shutter oder eine Pulsbeleuchtungseinrichtung (14), insbesondere eine Blitzlichtbeleuchtung aufweist, und wobei die Steuer- und Auswertungseinheit (22) dafür ausgebildet ist, einen Aufnahmezeitpunkt für ein Bild durch Öffnung des Shutters oder Auslösen eines Beleuchtungspulses festzulegen.

11. Kamera (10) nach einem der vorhergehenden Ansprüche,
wobei die Fokuseinheit (18, 20) eine optomechanische Verstelleinheit zur Veränderung einer Brennweite oder einer Bildschnittweite der Empfangsoptik (18) oder eine Flüssiglinse aufweist.

12. Kamera (10) nach einem der vorhergehenden Ansprüche,
die als kamerabasierter Codeleser ausgebildet ist und eine Decodiereinheit aufweist, um in einem Bild Codebereiche (108) zu erkennen und deren Codeinhalt auszulesen.

13. Verfahren zur Aufnahme scharfer Bilder, bei dem eine Fokuslage einer Empfangsoptik (18) kontinuierlich zwischen einer ersten Fokuslage und einer zweiten Fokuslage verfahren und währenddessen bei mindestens einer dritten Fokuslage und einer vierten Fokuslage jeweils ein Bild aufgenommen wird, wobei ein Schärfegrad der Bilder bestimmt und daraus eine Fokuslage größter Bildschärfe ermittelt wird,
**dadurch gekennzeichnet,**
**dass** die Fokuslage zyklisch und kontinuierlich mit einem bekannten und vorhersagbaren Zeitverhalten zwischen der ersten Fokuslage und der zweiten Fokuslage hin und her verfahren wird, dass anhand der Fokuslage größter Bildschärfe und des Zeitverhaltens ein Zeitpunkt vorgegeben wird, zu dem die Aufnahme für ein weiteres Bild auszulösen ist und dass das weitere Bild aufgenommen wird, wenn während des zyklischen Verfahrens die Fokuslage größter Bildschärfe erreicht wird.

14. Verfahren nach Anspruch 13,
wobei aus mehreren nacheinander aufgenommenen weiteren Bildern eines bewegten Objektes (102) ein Gesamtbild zusammengefügt und/oder aus mehreren Bilden ein Bild mit verbesserter Bildschärfe berechnet wird.

15. Verfahren nach Anspruch 13 oder 14,
wobei in einem Bild Codebereiche (108) erkannt und deren Codeinhalte ausgelesen werden.

## Claims

1. A camera (10) having an image sensor (12) for taking images, a reception optics (18), an adjustable focusing unit (18, 20) for setting a focal position of the reception optics (18) as well as a control and evaluation unit (22) which is configured to continuously move the focal position of the reception optics (18) between a first focal position and a second focal position by means of the focusing unit (18, 20), meanwhile to take a respective image at at least a third focal position and a fourth focal position, to determine a degree of sharpness of the images and to determine a focal position of greatest image sharpness therefrom,
**characterized in that** the control and evaluation unit (22) is furthermore configured to move the focal position cyclically and continuously to and fro between the first focal position and the second focal position with a known and predictable time behavior, to set a point in time at which a shot for a further image is to be triggered based on the focal position of greatest image sharpness and the time behavior, and to take the further image when the focal position of greatest image sharpness is reached during the cyclic movement.

2. The camera (10) in accordance with claim 1,
wherein the first focal position and/or the second focal position correspond to an end position of the focusing unit (18, 20).

3. The camera (10) in accordance with claim 1 or 2,
wherein the first focal position is the same as the third focal position and/or the second focal position is the same as the fourth focal position.

4. The camera (10) in accordance with any of the preceding claims, wherein the control and evaluation unit (22) is configured to store at least one previously determined focal position of greatest image sharpness and to take it into account on the determination of a current focal position of greatest image sharpness.

5. The camera (10) in accordance with any of the preceding claims, wherein the control and evaluation unit (22) is configured to take account of at least one image previously taken at a focal position of greatest image sharpness on the determination of a current focal position of greatest image sharpness.

6. The camera (10) in accordance with any of the preceding claims, wherein the control and evaluation unit (22) is configured to join together a total image from sequentially taken images, in particular image lines of objects (102) moved relative to the camera (10).

7. The camera (10) in accordance with any of the preceding claims, wherein the control and evaluation unit (22) is configured to calculate an image having improved image sharpness from a plurality of images.

8. The camera (10) in accordance with any of the preceding claims, wherein the control and evaluation unit (22) is configured to determine the degree of sharpness of at least one region of interest of an image and to determine the focal position of greatest image sharpness using the degree of sharpness of the region of interest.

9. The camera (10) in accordance with any of the preceding claims, wherein the control and evaluation unit (22) is configured to calculate and to output a distance of objects (102) taken.

10. The camera (10) in accordance with any of the preceding claims which has a shutter or a pulse illumination device (14), in particular a flash illumination, and wherein the control and evaluation unit (22) is configured to fix a taking time for an image by opening the shutter or releasing an illumination pulse.

11. The camera (10) in accordance with any of the preceding claims, wherein the focusing unit (18, 20) has an optomechanical adjusting unit for varying a focal length or a back focal length of the reception optics (18) or has a liquid lens.

12. The camera (10) in accordance with any of the preceding claims, which is configured as a camera-based code reader and has a decoding unit to recognize code regions (108) in an image and to read out their code content.

13. A method for taking sharp images, wherein a focal position of a reception optics (18) is continuously moved between a first focal position and a second focal position and meanwhile a respective image is taken at at least a third focal position and a fourth focal position, wherein a degree of sharpness of the images is determined and a focal position of greatest image sharpness is determined therefrom,
**characterized in that** the focal position is moved cyclically and continuously to and fro between the first focal position and the second focal position with a known and predictable time behavior, **in that** a point in time is set at which a shot for a further image is to be triggered based on the focal position of greatest image sharpness and the time behavior, and **in that** the further image is taken when the focal position of greatest image sharpness is reached during the cyclic movement.

14. The method in accordance with claim 13,
wherein a total image is joined together from a plurality of successively taken further images of a moved object (102) and/or an image having improved image sharpness is calculated from a plurality of images.

15. The method in accordance with claim 13 or 14,
wherein code regions (108) are recognized in an image and their code contents are read out.

## Revendications

1. Caméra (10) comprenant un capteur d'images (12) pour enregistrer des images, une optique de réception (18), une unité de focalisation réglable (18, 20) pour régler une position de focalisation de l'optique de réception (18), ainsi qu'une unité de commande et d'évaluation (22) qui est réalisée pour déplacer, au moyen de l'unité de focalisation (18, 20), la position de focalisation de l'optique de réception (18) en continu entre une première position de focalisation et une seconde position de focalisation, et pendant cela pour enregistrer respectivement une image à au moins une troisième position de focalisation et à une quatrième position de focalisation, afin de déterminer un degré de netteté des images et déterminer à partir de cela une position de focalisation donnant la plus grande netteté,
**caractérisée en ce que**
l'unité de commande et d'évaluation (22) est en outre réalisée pour déplacer la position de focalisation de manière cyclique et en continu avec un comportement temporel connu et prévisible entre la première position de focalisation et la seconde position de focalisation et en retour, pour imposer, au moyen de la position de focalisation donnant la plus grande netteté et au moyen du comportement temporel, un instant auquel il convient de déclencher l'enregistrement pour une autre image, et enregistrer l'autre image lorsque, pendant le processus cyclique, la position de focalisation donnant la plus grande netteté est atteinte.

2. Caméra (10) selon la revendication 1,
dans laquelle la première position de focalisation et/ou la seconde position de focalisation correspondent à une déviation finale de l'unité de focalisation (18, 20).

3. Caméra (10) selon la revendication 1 ou 2,
dans laquelle la première position de focalisation est égale à la troisième position de focalisation et/ou la seconde position de focalisation est égale à la quatrième position de focalisation.

4. Caméra (10) selon l'une des revendications précédentes,
dans laquelle l'unité de commande et d'évaluation (22) est réalisée pour mémoriser au moins une position de focalisation déterminée auparavant et donnant la plus grande netteté et pour en tenir compte lors de la détermination d'une position de focalisation actuelle donnant la plus grande netteté.

5. Caméra selon l'une des revendications précédentes,
dans laquelle l'unité de commande et d'évaluation (22) est réalisée, lors de la détermination d'une position de focalisation actuelle donnant la plus grande netteté, pour tenir compte d'au moins une image enregistrée auparavant à une position de focalisation donnant la plus grande netteté.

6. Caméra (10) selon l'une des revendications précédentes,
dans laquelle l'unité de commande et d'évaluation (22) est réalisée pour assembler une image globale à partir d'images enregistrées les unes après les autres, en particulier des lignes d'images d'objets (102) déplacés par rapport à la caméra (10).

7. Caméra (10) selon l'une des revendications précédentes,
dans laquelle l'unité de commande et d'évaluation (22) est réalisée pour calculer, à partir de plusieurs images, une image avec une netteté améliorée.

8. Caméra (10) selon l'une des revendications précédentes,
dans laquelle l'unité de commande et d'évaluation (22) est réalisée pour déterminer le degré de netteté d'au moins une zone intéressante d'une image, et pour déterminer la position de focalisation donnant la plus grande netteté au moyen du degré de netteté de la zone intéressante.

9. Caméra (10) selon l'une des revendications précédentes,
dans laquelle l'unité de commande et d'évaluation (22) est réalisée pour calculer et pour fournir une distance par rapport à des objets enregistrés (102).

10. Caméra (10) selon l'une des revendications précédentes,
qui comprend un obturateur ou un dispositif d'éclairage par impulsion (14), en particulier un éclairage flash, et dans laquelle l'unité de commande et d'évaluation (22) est réalisée pour fixer un instant d'enregistrement pour une image par ouverture de l'obturateur ou par déclenchement d'une impulsion d'éclairage.

11. Caméra (10) selon l'une des revendications précédentes,
dans laquelle l'unité de focalisation (18, 20) comprend une unité de réglage optomécanique pour modifier une distance focale ou une largeur de fragment d'image de l'optique de réception (18), ou bien une lentille fluide.

12. Caméra (10) selon l'une des revendications précédentes,
qui est réalisée sous forme de lecteur de code basé sur une caméra et comprend une unité de décodage, afin de reconnaître dans une image des zones de code (108) et de lire leur contenu codé.

13. Procédé pour enregistrer des images nettes, dans lequel on déplace une position de focalisation d'une optique de réception (18) en continu entre une première position de focalisation et une seconde position de focalisation et pendant cela, on enregistre respectivement une image à au moins une troisième position de focalisation et une quatrième position de focalisation, dans lequel on détermine un degré de netteté des images et on détermine à partir de celui-ci une position de focalisation donnant la plus grande netteté,
**caractérisé en ce que**
on déplace la position de focalisation de manière cyclique en continu avec un comportement temporel connu et prévisible entre la première position de focalisation et la seconde position de focalisation et en retour, **en ce que** l'on impose, à partir de la position de focalisation donnant la plus grande netteté et à partir du comportement temporel, un instant auquel il convient de déclencher l'enregistrement pour une autre image, et **en ce que** l'on enregistre l'autre image lorsque, pendant le processus cyclique, on atteint la position de focalisation donnant la plus grande netteté.

14. Procédé selon la revendication 13,
dans lequel on assemble une image globale à partir de plusieurs images prises les unes après les autres d'un objet déplacé (102), et/ou on calcule à partir de plusieurs images une image avec une netteté améliorée.

15. Procédé selon la revendication 13 ou 14,
dans lequel on reconnaît dans une image des zones de code (108) et on lit leur contenu codé.
